# EUROPEAN PATENT APPLICATION

(11) **EP 0 706 909 A2**
(43) Date of publication of application: **17.04.1996**
(21) Application number: 95115871.6
(22) Date of filing: 09.10.1995
(51) Int. Cl.: B60L 11/18

(54) **Electric propulsion device, particularly in one, two or more driving wheels vehicles and vehicle with such propulsor device**

(30) Priority: 12.10.1994 IT GE940115
(71) Applicant: SELIN SISTEMI S.r.l., I-16153 Genova (IT)
(72) Inventor: Pallottini, Alberto, I-16153 Genova (IT); Mengaroni, Corrado, I-20099 Sesto San Giovanni, Milano (IT)
(74) Representative: Porsia, Attilio, Dr.

(57) **Abstract**

A propulsion device of the electric motor type, particularly for vehicles with one, two or more driving wheels, comprises at least one electric motor (2, 2') of the type known as "brushless" which is connected dynamically to at least one driving wheel; an electronic power supply unit for the said brushless motor, with a source of direct-current electrical energy (1), a unit (4, 6) generating a three-phase alternating current to operate the motor (2,2') from the said direct current power supply, and with at least one feedback loop (7, 9) which controls the alternating operating current generating unit (4, 6). According to the invention, a microprocessor (7), into which the control and regulation logic is pre-loaded in the form of at least one program, is provided in the feedback loop (7, 9), as the logic component controlling the alternating operating current generating unit (4, 6) and as an interface with means (2, 2', 15) of detecting the operating conditions of the motor (2, 2') and/or means (10, 110, 210, 310, 16) of presetting the operating conditions.

## Description

The invention relates to a propulsion device of the electric motor type, particularly for vehicles with one, two or more driving wheels, this propulsion device comprising:
- at least one electric motor of the type known as "brushless" which is connected dynamically to at least one driving wheel;
- an electronic power supply unit for the said brushless motor, with a source of direct-current electrical energy, a unit generating a three-phase alternating current to operate the motor from the said direct current power supply, known as an "inverter", and with at least one open and/or closed feedback loop in combination with means of detecting the operating parameters of the electric motor and/or means of presetting the operating conditions of the electric motor, this feedback loop controlling the alternating operating current generating unit in accordance with the parameters of modulation (frequency and/or amplitude) of this unit, or of the power supplied in accordance with the preset and/or detected operating parameters of the motor.

At the present time, power supply units for electric motors of the brushless type have a substantially similar construction in which the logic for modulating and regulating the alternating operating currents is hard-wired into the hardware structure, in other words into the power supply circuit. This makes it difficult to adapt the power supply units to different types of motor with relatively similar characteristics, or to the possible multiple conditions of operation of the motor in different applications. Once constructed, the feedback loops are limited in respect of the increase of the possible reference variables and the modes or processes of regulation, and it is therefore necessary to produce a different construction for each different application.

The object of the invention is to provide a propulsion device of the type described initially, in such a way that it is simply and reliably adaptable to the different application conditions and offers the possibility of extending, improving or varying the operating modes in a simple, fast and inexpensive way.

In particular, the invention is intended to provide a propulsion device which is particularly suitable for vehicles with one, two or more driving wheels and of a light type, and which therefore has a relatively compact, light and economic construction.

The invention achieves the above objects with a propulsion device of the type described initially, in which a microprocessor, into which the control and regulation logic is pre-loaded in the form of a program, is provided in the feedback loop as the logic component controlling the three-phase alternating operating current generating unit and as an interface with means of detecting the operating conditions of the motor and/or means of presetting the conditions of operation of the said generating unit.

A microprocessor of the type having what is known as RISC architecture is advantageous for this purpose.

According to a further improvement, the unit for generating the alternating current to operate the electric motor comprises a power unit provided with fast switching means by which the direct power supply current is modulated in such a way as to generate a three-phase alternating operating current, and a further microprocessor, also preferably of the type known as RISC, with the function of controlling the modulation and operating the switches of the power unit in a suitable way, a modulation program being loaded into the said modulating microprocessor and the said modulating microprocessor being connected to a line of the bus type for communication with the regulating microprocessor of the feedback loop.

This construction of the unit for supplying and operating the motor enables various types of operation and control of the motor to be provided, and enables the characteristics of the power supply unit to be adapted specifically and very precisely to the characteristics of the motor within a predetermined range. This is all done by the loading of suitable programs for controlling both the operating modes and the modulation characteristics while keeping the hardware structure substantially unchanged. The construction using microprocessors also enables different types of detectors of the actual operating conditions of the motor to be used, together with different types of means of manual presetting, the number and combination of which may be varied at will, simply by altering the system configuration programs. It is possible to provide a plurality of operation control programs which will be activated alternately by the command for selection of the operating mode. The sensors for detecting the actual operating conditions and the means of presetting the desired nominal operating conditions may all be connected to the feedback loop and activated according to the requirements of the operating program automatically by means of a coordination between the operating programs and configuration programs of the feedback loop.

The invention also relates to a vehicle provided with a propulsion device of the aforesaid type. In particular, the invention relates to vehicles with two wheels either with parallel axles such as bicycles, motorcycles, or similar, in which only one driving wheel, preferably the rear wheel, is provided, or those with two coaxial driving wheels placed side by side, such as cars, wheelchairs for the disabled, or similar. In the latter case, each of the two driving wheels is driven by an independent motor, each motor being associated with a power supply unit similar to that described for the vehicles with only one driving wheel each, the two units being controlled simultaneously by a further microprocessor, also of the RISC type, for controlling the combination of the drives, which provides a matched drive to the two independent driving wheels.

The invention also relates to other characteristics which further improve the propulsion device and the vehicle provided with it as described above, and which form the subject of the dependent claims.

The particular characteristics of the invention, and the advantages derived therefrom, are demonstrated in greater detail in the description of some preferred embodiments of the invention, illustrated by way of example and without restriction in the attached drawings, in which:
Fig. 1 is a block diagram of the power supply unit in the configuration for a single driving motor, for example in a bicycle;
Fig. 2 is a block diagram of the power supply unit in the configuration for two driving motors of two driving wheels, each driven by its own independent motor; and
Figs. 3 to 5 are axial sections of three corresponding variant embodiments of the electric driving motor according to the invention.

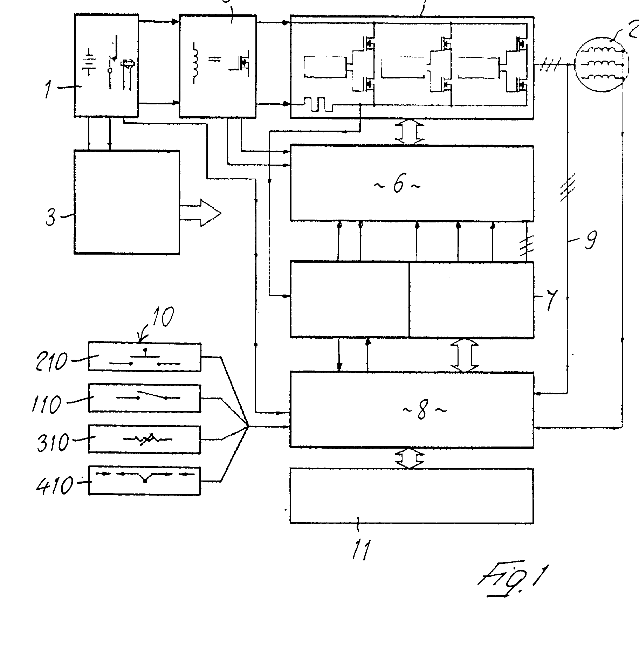

With reference to Fig. 1, a power supply unit for an electric motor of the brushless type comprises a power supply battery 1 which supplies electrical energy both to a power unit for the generation of a three-phase alternating current to operate the motor 2 and to a power supply unit 3 of an open and/or closed feedback loop which controls the power unit and forms the interface between sensors which detect the actual operating parameters of the motor and/or sensors which detect the conditions of use and/or means of presetting the nominal operating conditions.

The direct current from the battery 1 is supplied to the inputs of a power unit with controllable switches 4 through an active filter 5 which ensures a low fluctuation of the current absorbed from and returned to the battery 1. The battery 1 is therefore used in a better way, while the filter is associated with a relay which ensures electrical isolation. The modulation, in other words the control of switching in the power unit 4, is carried out by a microprocessor of the RISC type 6. The microprocessor 6 is controlled in turn by a feedback loop for the open and/or closed control system which comprises a further microprocessor 7 in combination with an analog logic unit 8. The power unit 4 may be made in any way, and is preferably made by what is known as 0 bus quasi-resonant technology using FET devices. The modulation is carried out by the microprocessor 6 which always establishes the best modulation path for maximum efficiency. The microprocessor 6 is connected by data exchange lines to the regulating microprocessor 7 which in turn communicates with the analog logic unit 8 to which are connected the sensors detecting the actual operating conditions and the conditions of use of the motor, and also the means of presetting the operating conditions, as indicated in a general way by the numbers 9 and 10 respectively. The analog logic unit 8 may also be connected to further external signalling and display means, such as indicator lamps, display devices, acoustic signalling devices, etc., indicated in a general way by the number 11.

With reference to a vehicle with one driving wheel, for example a bicycle or a motor cycle, the propulsion device according to the invention can be used to provide various operating options.

Programs for processing the feedback signals 9 and the signals supplied from further sensors for detecting the conditions of use, as well as those of the presetting means 10 and the maximum and minimum torque available from the motor, are loaded into the microprocessors 6 and 7. The modulating microprocessor 6 receives from the regulating microprocessor 7 the data obtained from the processing of the said signals, and by means of the program for controlling the modulation of the alternating operating current, operates the power unit 4 accordingly. The use of RISC technology microprocessors ensures very high processing and control speeds.

With reference to a first embodiment, consisting of a bicycle whose rear wheel is driven by an electrical motor 2, when the power supply unit is operated, for example by means of a starter switch 110, a microprocessor resetting routine and a diagnostic check routine are executed. The regulating microprocessor then connects the battery to the power unit 4.

According to a first operating option, the regulating microprocessor 7 is programmed in such a way that the operating current is not supplied to the motor 2 until the motor has reached a specified minimum number of revolutions. The number of revolutions of the motor 2 is detected without the aid of probes but directly by means of the application of the back electromotive forces produced by the motor during its rotation in the absence of a power supply, these forces being supplied to the regulating microprocessor 7 by the feedback line 9 through the analog logic unit 8. When the predetermined minimum number of revolutions has been reached, the regulating microprocessor 7 activates the modulating microprocessor 6 and the operating current is supplied to the motor 2. In this case, it is possible to program the regulating microprocessor 7 in such a way that the torque is not supplied abruptly to the motor but is supplied according to a predetermined phase of progression in order not to cause jerking. In order to make suitable allowance for the different conditions of use, on the flat, uphill and downhill, it is advantageous to connect the analog logic unit 8 to an inclination sensor whose signal is supplied to the regulating microprocessor 7, whose program adjusts the minimum number of revolutions or the modes of activation of the modulating microprocessor 6 in a way conforming to the condition of starting or running on the flat, uphill or downhill. In uphill conditions, the minimum number of revolutions will be reduced from that specified for running on the flat, while in the case of downhill running a condition may be present in which no operating current is supplied to the motor, depending on the speed of rotation of the motor.

The program also provides an upper limit to the number of revolutions of the motor, above which the supply of the operating current is cut off. This is to prevent the motor from continuing to supply torque when the driving wheel is rotating freely, for example in case of a fall.

Advantageously, the operating conditions of the motor may be detected by a special procedure of probe simulation. The regulating microprocessor 7 reads in sequence the zero crossings of the back electromotive force which at these moments is not switching and is therefore free of divided components which interfere with the reading. The microprocessor measures the time elapsing between the zero crossing of this phase and the zero crossing of the immediately following phase, with the same characteristics of non-splitting. This count, divided by two, yields the time for switching to the next phase. According to an improvement, to avoid false readings, the regulating microprocessor cyclically executes the reading only of the phase which should pass through zero and with the correct slope. The regulating microprocessor 7 also opens a reading window which is a function of the preceding speed and a preset minimum value of inertia. In practice, if the zero crossing of the phase takes place before or after this window, the regulating microprocessor 7 cuts off the motor torque.

The regulation program may also comprise the control of a phase of recovery of electrical energy, for example in conditions of very fast descent, in which the rotation speed of the motor is higher than the maximum specified level, so that the power unit is never activated to supply the operating current. In this case, the recovery phase obviously constitutes a phase of regenerative electrical braking. The maximum current may be preset either during programming or by the driver. The recovered power is controlled by the regulating microprocessor according to the state of charge of the battery 1. The activation of the electrical braking may also take place on command, while the motor is operating, during a normal phase of braking, for deceleration or stopping. A push-button switch 210 activates the electrical braking and may be mounted either separately or in combination with an ordinary operating device for mechanical friction brakes.

According to a further variant, it is possible to provide an additional device for the progressive adjustment of the level of torque supplied by the motor, which is indicated by 310. This device may be made in passive or active form. The signal supplied by the progressive adjustment device is supplied to the regulating microprocessor 7 through the analog logic unit 8. The regulating microprocessor 7 operates the modulating microprocessor 6 to supply an operating current coordinated with the progressive adjustment signal. The coordination takes place within the control program, while the variations and gradients of acceleration are established within the limits set by the characteristics of the motor in accordance with the speed and possibly the running conditions.

The device for the progressive adjustment of the level of torque of the motor may, for example, be made in the form of an accelerator grip of the type used in motorcycles.

The particular structure of the device according to the invention makes it possible to provide a further operating mode known as the "assisted operation" mode. In a bicycle for example, the regulating microprocessor 7 is programmed in such a way that the torque supplied by the electric motor 2 is proportional or equal to the torque supplied mechanically by means of the pedals. The propulsion device described above enables this operation to be obtained without the use of torque sensors. The control program is designed in such a way that the regulating microprocessor estimates the torque developed by the user, by calculating the acceleration of the vehicle and according to a mean value of total inertia and the characteristic of the estimated torque of resistance toe forward movement which are stored in the program. By using an inclinometer 410, it is possible to correct the mean value of inertia and the estimated resistive torque recursively using a suitable algorithm.

With reference to what has been described above for application to a bicycle, the propulsion device may be used to operate the driving wheel of a motorcycle or similar, by suitable design of the electric driving motor. In this case, the supply of torque, in other words the activation of the power circuit 4, will not be dependent on a minimum number of revolutions of the driving wheel, in other words a predetermined initial starting speed, but the microprocessor 7 may be programmed in such a way that, by means of one or more suitable acceleration gradients which may also be set by means of a progressive control device which may be in the form of an accelerator grip 310, it immediately supplies the operating current to the motor, which will supply the starting and acceleration torque in a progressive and controllable way.

The propulsion device described above may also be applied to vehicles with two or more driving wheels, each of which is provided with its own independent operating motor 2, 2'. In this case also, the operating modes stated above are applicable, but means of coordinating the operation of the two motors 2, 2' are provided.

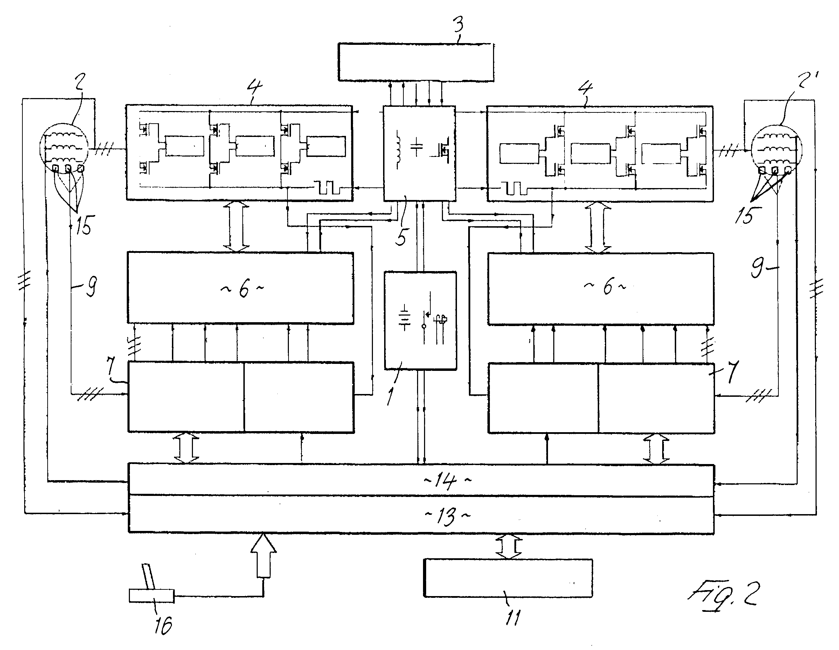

Fig. 2 is an illustration of the control unit of a propulsion device for a vehicle of the above type, and in particular for a carriage or wheelchair for the disabled.

The control unit consists of a power supply unit for each motor 2, 2'. The structures of the two power supply units are similar to that previously described for a single driving wheel, while the coordination of operation of the two driving wheels is obtained by replacing the analog logic units 8 with a common controlling microprocessor 13, which controls both regulating microprocessors 7 of the two power supply units according to an operation coordination program, and a multiplexer 14.

In this case, it is also necessary to detect the operating parameters of the motors 2, 2' by means of suitable probes 15, for example optical, Hall, or similar probes, whose signals are sent directly to the corresponding regulating microprocessor 7, forming a first feedback loop according to the speed, of the operating current 9. A second feedback loop is formed by the microprocessor 13 controlling the coordination of operation, which receives 16 at its inputs the power supply currents applied to the motors 2, 2'. It is possible to program the microprocessors 6, 7, 13 in such a way as to obtain any of the operating modes described above and in particular also the "assisted operation" mode. This mode may be convenient for use in carriages or similar.

A program for coordinating the operation of the two independent driving wheels is loaded into the controlling microprocessor 13, in such a way as to prevent the vehicle from undergoing undesirable changes in its course, and in extreme cases even a rotation or reversal of direction, as a result of a difference between the moments of resistance in each of the two wheels. These conditions may be present in the case of different frictional forces between the wheels and the ground, or as a result of different ground configurations under the two wheels, and also in the presence of lateral gradients or small obstacles under only one of the two wheels. The effect of different forces acting on the driving wheels is particularly marked in the condition of acceleration of the vehicle, for example during starting and cornering, and, if not corrected suitably in real time, requires the continuous active correction of the path by the user and therefore causes movement along a sinuous path. According to one embodiment of the invention, the program loaded into the controlling microprocessor 13 detects the different operating conditions of the two motors 2, 2', in particular the actual speeds of the two driving wheels, by means of Hall probes 15, and operates the regulating microprocessors 7 of the two power supply units in such a way that the corrections of rotation speed are carried out within identical periods for both wheels. The gain in speed, in other words the acceleration, of the driving wheels is then regulated according to their speed and according to the final speed preset for them, in such a way that both wheels reach the preset final speed within equal periods. This forms a kind of electronic differential which also ensures a stop if one of the two driving wheels rotates freely or is halted by an insurmountable obstacle.

This control mode is particularly advantageous for application to wheelchairs for the disabled or similar, and for controlling cornering or changes of path. In this case, the propulsion device is operated by means of a device of the type known as a joystick 16, or similar. The orientation of the control lever of the joystick device 16 sets the differences in speed between the two driving wheels necessary for cornering, forward running, reverse running, and reversal of running by rotation about itself, in which one driving wheel is driven in the opposite direction to the other. The inclination of the control lever with respect to the perpendicular central position sets the maximum speed. The signal supplied to the controlling microprocessor 13 from the joystick control device 16 is converted into reference values of final speeds for the two driving wheels. At the same time, the program reads the actual variations of speed of the two wheels and calculates, and corrects in real time, the variation of speed or the positive or negative acceleration to be imparted to each of the two wheels in order to make them reach the preset final reference speed at the same instant. The reaching of the preset speeds will therefore always be substantially asymptotic, and will have a greater or lesser rapidity according to the speed conditions of the two wheels. Cornering is therefore executed progressively and with very high precision. Obviously, safety devices preventing the execution of manoeuvres such as a fast change from forward to reverse running according to the speed may be provided in the program, and may consist of maximum acceleration limits. The same may also apply to very tight corners or reversals of running by rotation of the vehicle about itself.

In wheelchairs for the disabled, in particular, which are provided with two small wheels, freely rotatable about their axes and freely orientatable about a vertical axis, in front of the two driving wheels, the controlling microprocessor 13 programmed as above makes it possible to avoid phenomena of deviation from the chosen course due to the different orientation of the small wheels with respect to the axis of the wheelchair. According to an improvement, by also connecting an inclinometer 310 to the controlling microprocessor 13 it is possible to adjust the acceleration gradient to match the different conditions of inclination of the vehicle, so that the controlling microprocessor 13 can recognize whether the force on the wheel is due to an obstacle or to the presence of an ascent, and can adjust the acceleration progressively within safety limits preventing the backward tilting and overturning of the vehicle.

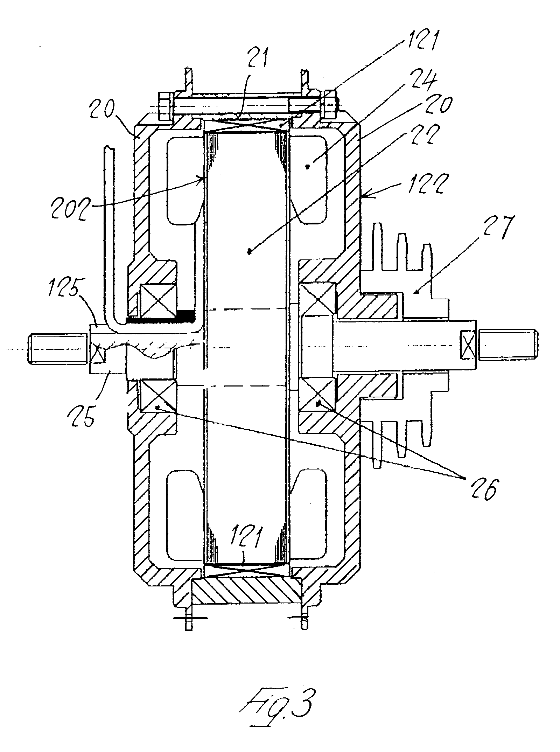

The invention also relates to a vehicle with one, two or more driving wheels, in which, as shown in Figs. 3 to 5, the electric driving motor forms the hub of the wheel or wheels. The rotor 102 is outside the stator 202. The stator 202 is associated with the means of fixing the wheel, while the rotor 102 carries the spokes or supporting elements of the rim (not shown). The rotor 102 consists of two coaxial cylindrical half-shells 20, between which can be gripped a ring 21 which carries inside it a plurality of poles 121 of a permanent magnet. The stator consists of a stack of laminations 22 which carry a plurality of stator windings 24, whose electrical connecting cables are led to the outside of the motor inside a channel 125 in the supporting axle 25 of the wheel, this axle being fixed to the stator 202 and having the two half-shells 20 of the rotor supported on it by means of bearings 26 so that they are rotatable about it.

To eliminate disturbances caused by the motor which may be transmitted through the air (acoustic noise) or through the structure of the vehicle (vibrations), the electromagnetic structure of the motor is optimized in relation to the design of the permanent magnet according to the magnetic characteristics of the stator. In the presence of three stator cables per rotor pole, the optimal ratio is 0.78:0.83 τ, where τ is the pole pitch.

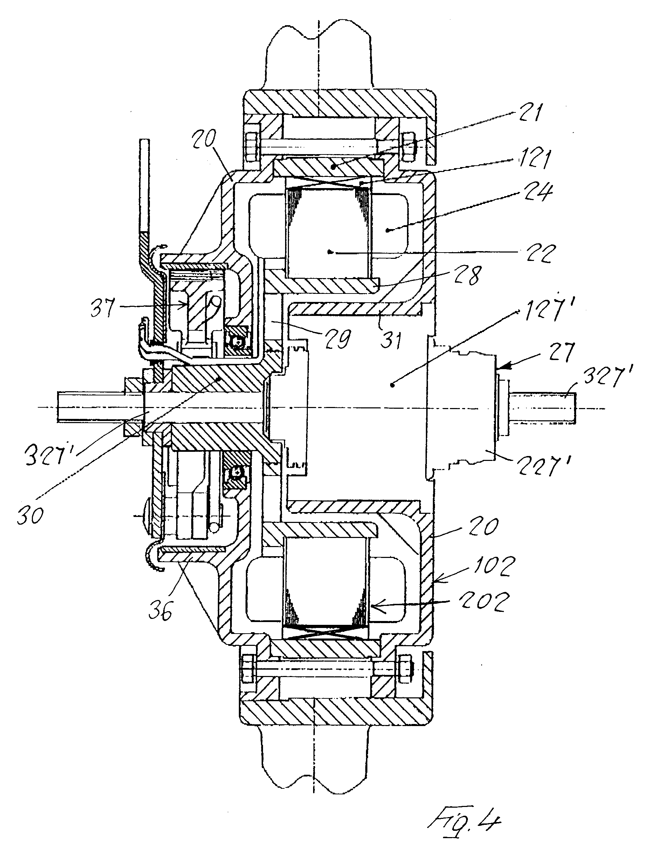

In a first embodiment, Figs. 3 and 4, particularly suitable for application to bicycles or motorcycles, the supporting axle 25 of the wheel is made so that it passes through the wheel and projects externally at both ends of the motor with threaded ends interacting with locking nuts, the whole being designed in such a way that it fits an ordinary fork (not illustrated) of the type provided in the frames of bicycles, motorcycles, or similar.

According to an improvement, particularly suitable for use in bicycles or motorcycles, a freewheel mechanism of the type ordinarily used for bicycles, having a sprocket for a transmission chain for pedal operation, can be fixed to and rotate integrally with the external face of one of the two half-shells 20 of the rotor 102. As illustrated in Fig. 3, the freewheel mechanism may be provided with a plurality of adjacent coaxial toothed sprockets and the driving wheel according to the invention may thus be provided in combination with a bicycle gear mechanism of the derailleur type.

Fig. 4 shows a variant embodiment of the example shown in Fig. 3, in which one half-shell of the rotor may be associated with a bicycle gear mechanism of the type incorporated in the hub of the wheel, for example one of the type marketed under the number M3120T by the Sachs company. These types of gear mechanism are provided with an outer cylindrical part 127', to which the spokes of the wheel are usually connected, and an inner part 227' which can be fixed so that it is stationary by means of a supporting axle 327' of the wheel. In this case, the supporting axle of the motor consists of the axle 327' of the gear mechanism 27' and directly supports only one of the two rotor half-shells 102 in such a way that this half-shell is freely rotatable. The stator 202 is supported by an inner ring 28 which, in the central area between the two half-shells 20, is supported by and projects from a disc 29, engaged with the axle 327' by means of a bush 30. The internal diameter of the ring 28 supporting the stator 202 is such that the opposite rotor half-shell 20 has a coaxial sleeve 31 which extends inside the stator 202 and forms the housing for the gear mechanism 27'. The gear mechanism 27' is engaged in the supporting sleeve 31 with the outer rotatable cylindrical part 127' rotating integrally with the half-shell 20 of the rotor 102 which is held against the other, opposite half-shell 20.

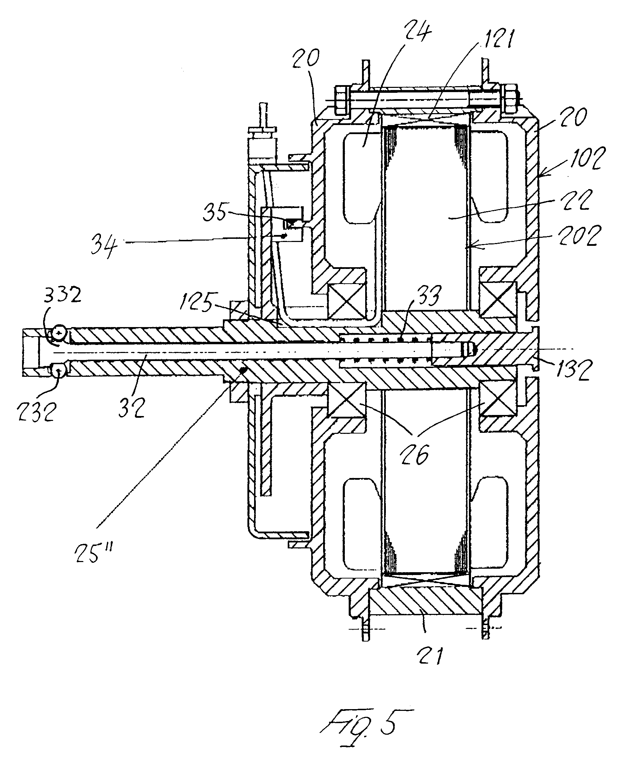

The variant embodiment shown in Fig. 5 is substantially identical to the preceding embodiments. It differs from these in that the wheel fixing means are of the quick-release type on a projecting shaft. The supporting axle of the motor 25'' is made tubular and projects on only one side of the wheel, namely on its inner side, with one end which can be inserted in an axle support. Inside the tubular shaft there is a slidable rod 32 which projects from the end of the tubular axle 25'' on the outer side of the wheel with a gripping element 132. The opposite end for insertion into the support which is integral with the vehicle is provided with a head that can be expanded by means of the rod 32. In particular, the expandable head has a plurality of radial holes, in each of which a ball 232 is housed. When the rod 32 is slid axially, the balls 232 are pushed either radially outwards, in the active condition of locking to the support, or radially inwards, in the withdrawn inactive condition of disengagement from the support, by means of a terminal truncated conical portion 332 of the rod 32. The rod 32 is held firmly in the position in which the balls 232 are in the active locking condition by means of a spring 33. This type of projecting support with quick attachment of the wheel is particularly advantageous in applications to wheelchairs for the disabled, in which the wheels frequently have to be dismounted. The axle 25'' also carries a position sensor 34, for example a suitable electromagnetic transducer, which interacts with an associated emitter 35, for example a magnet, which rotates integrally with the corresponding rotor half-shell 20.

As shown in particular in Fig. 4, a brake of the mechanical type may also be incorporated into the motor according to the invention. The brake is advantageously of the drum type. The drum is formed by an annular surface 36 projecting coaxially from the outer side of one of the two half-shells 20 of the rotor 102, while inside the drum the brake shoes 37 are carried on the supporting axle 327'.

## Claims

1. Propulsion device of the electric motor type, particularly for vehicles with one, two or more driving wheels, the device comprising:
- at least one electric motor (2, 2') of the type known as "brushless" which is connected dynamically to at least one driving wheel;
- an electronic power supply unit for the said brushless motor, with a source of electrical energy (1) in the form of a direct current, a unit (4, 6) generating a three-phase alternating current to operate the motor (2, 2') from the said direct current power supply, known as an "inverter", and with at least one open and/or closed feedback loop (7, 9) in combination with means (2, 2', 15) of detecting the operating parameters of the electric motor (2, 2') and/or means (10, 110, 210, 310, 16) of presetting the operating conditions of the electric motor, this feedback loop (7, 9) controlling the alternating operating current generating unit (4, 6) in accordance with the parameters of modulation (frequency and/or amplitude) of this unit, or of the power supplied, in accordance with the preset and/or detected operating parameters of the motor, characterized in that a microprocessor (7), into which the control and regulation logic is pre-loaded in the form of at least one program, and preferably a plurality of different alternative programs, is provided in the feedback loop (7, 9) as the logic component controlling the alternating operating current generating unit (4, 6) and as an interface with means (2, 2', 15) detecting the operating conditions of the motor (2, 2') and/or with means (10, 110, 210, 310, 16) for presetting the operating conditions.

2. Device according to Claim 1, characterized in that the unit for generating the alternating current to operate the electric motor comprises a power unit (4) provided with fast switching means by which the direct power supply currents is modulated in such a way as to generate a three-phase alternating operating current, and a further microprocessor (6) for modulation, with the function of controlling the modulation and operating the switches of the power unit (4) in a suitable way, a modulation program being loaded into the said modulating microprocessor (6) and the said modulating microprocessor being connected to a line of the bus type for communication with the regulating microprocessor (7) of the feedback loop.

3. Device according to Claims 1 or 2, characterized in that the regulating (7) and modulating (6) microprocessors are of the type known as RISC.

4. Device according to one or more of the preceding claims, characterized in that an active filter (5) with a relay for connecting the source (1) to the said power unit (4) is provided between the source of electrical energy (1) and the power unit (4).

5. Device according to one or more of the preceding claims, characterized in that the means of detecting the actual operating conditions of the motor (2, 2'), in other words the speed of rotation and/or the number of revolutions, consist of the motor itself, a probe simulation program being loaded into the regulating microprocessor (7) and the regulating microprocessor (7) being connected to the motor (2, 2') by means of a feedback line (9) through which the back electromotive force is measured.

6. Device according to Claim 5, characterized in that the regulating microprocessor (7) is programmed in such a way that it reads in sequence the zero crossings of the back electromotive force which is not switching at these instants and measures the time elapsing between the zero crossing of the phase which is not switching and the zero crossing of the phase immediately following, with the same characteristics of splitting, and calculates the time for switching to the next phase by dividing by two.

7. Device according to Claim 6, characterized in that the regulating microprocessor (7) is programmed in such a way that it cyclically reads only the phase passing through zero with the correct slope and opens a reading window which is a function of the preceding speed and a preset minimum value of inertia, cutting off the torque from the motor (2, 2') if the zero crossing of the phase takes place before or after the reading window.

8. Device according to one or more of the preceding claims, characterized in that the regulating microprocessor (7) is programmed in such a way that it activates the microprocessor (6) and the power unit (4) only when the motor (2, 2') has a predetermined minimum rotation speed which may be preset, and cuts off the supply of operating current when the rotation speed of the motor exceeds a predetermined maximum rotation speed which may be preset.

9. Device according to Claim 8, characterized in that the regulating microprocessor (7) is programmed in such a way that, according to the preset speed, it operates the power unit (4) according to predetermined functions of acceleration, in other words of gain in speed over time.

10. Device according to one or more of the preceding claims, characterized in that means of manual presetting of activation according to resident programs (110), and/or means (310, 16) of manual activation which at the user's command emit variable signals for presetting a maximum speed and/or torque level of the motor (2, 2'), for example of the type similar to accelerator grips or control levers of the joystick type which emit signals varying according to the position, are provided in combination or as alternatives.

11. Device according to one or more of the preceding claims, characterized in that, in combination or as an alternative, the regulating microprocessor (7) is programmed in such a way that it provides a torque substantially equal to the torque supplied by manual operation of the vehicle.

12. Device according to Claim 11, characterized in that the regulating microprocessor (7) is connected to an inclinometer (410) for the determination of the operating conditions of the motor and the correction of the minimum and maximum speeds of activation and cut-off of the supply of the power current to the motor and for the determination of the resistive torque on the driving wheel.

13. Device according to one or more of the preceding claims, characterized in that the regulating microprocessor (7) is programmed in such a way that when the maximum speed of rotation of the motor (2, 2') is exceeded and/or when a braking command is received the power unit (4) is cut off and the electrical energy produced by the motor (2, 2') is recovered, the maximum intensity of charging current being presettable and the recovered power being controlled by the regulating microprocessor (7) according to the state of charge of the source of electrical energy (1).

14. Device according to one or more of the preceding claims, characterized in that two or more independent driving motors (2, 2') are provided, one for each of the driving wheels, at least two driving wheels being made coaxial with each other, and each of the said motors (2, 2') being associated with its own power supply unit, with the further provision of a microprocessor (13) to control the coordination of the operation of the motors (2, 2'), connected by means of a multiplexer (14) to the corresponding regulating microprocessors (7) of the different power supply circuits, the said controlling microprocessor (13) being programmed in such a way that it controls the operation of the independent driving wheels as an electronic differential.

15. Device according to Claim 14, characterized in that the controlling microprocessor (13) is connected through a feedback line to the motors (2, 2') and forms a second loop to regulate the rotation speed of the motors (2, 2'), the feedback lines being connected to Hall probes (15) to measure the actual rotation speeds of the motors (2, 2').

16. Device according to Claim 15, characterized in that the controlling microprocessor (13) is programmed in such a way that it corrects the gain in speed of each motor (2, 2'), in other words its acceleration, as a function of the momentary speed of the said motors (2, 2') and in such a way that it determines the reaching of presettable reference rotation speeds of the motors in the same instant of time.

17. Device according to Claim 16, characterized in that the controlling microprocessor (13) is connected to means (16) of controlling the steering and/or changes in course, and reversal of the direction of running, by which suitably different speeds are set for the motors (2, 2') of the two coaxial driving wheels, for example a joystick device, the controlling microprocessor (13) being programmed in such a way that, according to the actual values of rotation speed of the motors (2, 2') which are detected (15), the said controlling microprocessor (13) regulates the positive or negative gain in speed of the individual motors (2, 2'), in such a way that the said preset speeds are reached simultaneously by both the motors (2, 2'), while keeping the necessary accelerations within the preset maximum values.

18. Device according to one or more of the preceding claims, characterized in that the motor (2, 2') comprises an external rotor (102) consisting of two cylindrical half-shells (20) between which an annular permanent magnet (21) is axially gripped, the two cylindrical half-shells (20) being supported so that they are freely rotatable on an axle (25, 327', 25'') fixed coaxially to a stator (202) mounted inside the rotor (102), the motor forming the hub of a wheel in which the rotor (102) supports radial elements supporting the rim of the wheel, and the axle (25, 327', 25'') forming the fixing axle of the wheel.

19. Device according to Claim 18, characterized in that the axle (25) projects externally from the ends of the rotor (102) and has threaded ends for fixing to a fork.

20. Device according to Claim 18, characterized in that the axle (25'') projects only on the side of the wheel facing the vehicle and is provided at its projecting end with quick means (32, 132, 23) for attachment to and release from a support on the vehicle.

21. Device according to one or more of the preceding claims, characterized in that at least one of the half-shells (20) of the rotor (102) is associated with a braking device.

22. Device according to Claim 1, characterized in that the braking device consists of a drum brake, one of the half-shells (20) of the rotor (102) being provided with an annular coaxial surface (36) projecting in one piece from the outer end only and interacting with brake shoes (37) which can be moved apart and are supported together with the operating mechanism inside the ring of the axle (327').

23. Two-wheeled vehicle provided with the propulsion device according to one or more of the preceding claims, characterized in that it consists of a bicycle or a motorcycle.

24. Vehicle according to Claim 23, characterized in that it is provided with a pedal operating mechanism with chain transmission, one of the half-shells of the rotor being associated with a freewheel mechanism with a sprocket rotatable together with this half-shell.

25. Vehicle according to Claim 24, characterized in that the freewheel mechanism (27) has a plurality of coaxial sprockets with different numbers of teeth of the type used for derailleur bicycle gear mechanisms.

26. Vehicle according to Claim 3, characterized in that the rotor (102) can be associated with a bicycle gear mechanism (27') of the type incorporated in the wheel hubs.

27. Vehicle according to Claim 26, characterized in that the said gear mechanism is provided with an outer cylindrical part (127') rotatable with respect to an inner part (227') provided with a supporting axle (327') for fixing to the fork, and at least one of the half-shells (20) of the rotor (102) has a coaxial tubular housing which extends inside the stator (202) and in which the gear mechanism (27') is fixable with its outer cylindrical part (127') which rotates integrally with the half-shell (20) of the rotor (102), while its axle (327') forms the whole supporting axle of the wheel or at least one part of it, the other half-shell (20) of the rotor (102) being supported rotatably directly on the said axle (327') and the stator (202) being supported on and projecting from the axle (327') of the wheel, inside the rotor (102).

28. Vehicle provided with a propulsion device according to one or more of the preceding claims, characterized in that it has at least two coaxial driving wheels and at least one wheel on a further axle, in particular a wheelchair for the disabled.
